# EUROPÄISCHE PATENTSCHRIFT

(11) **EP 3 498 526 B1**
(45) Veröffentlichungstag und Bekanntmachung des Hinweises auf die Patenterteilung: **22.04.2020**
(21) Anmeldenummer: 18205847.9
(22) Anmeldetag: 13.11.2018
(51) Int. Cl.: B60N 2/24, B60N 2/75, B60N 2/18, B60N 2/38

(54) **FAHRZEUGSITZ MIT VERSTELLEINRICHTUNG**
VEHICLE SEAT WITH ADJUSTMENT AID
SIÈGE DE VÉHICULE POURVU DE DISPOSITIF DE RÉGLAGE

(30) Priorität: 12.12.2017 DE 102017129556
(43) Veröffentlichungstag der Anmeldung: 19.06.2019
(73) Patentinhaber: GRAMMER AG, 92224 Amberg (DE)
(72) Erfinder: Pelka, Joachim, 92224 Amberg (DE); Lorey, Konstantin, 92546 Schmidgaden (DE)
(74) Vertreter: Hannke, Christian

(56) Entgegenhaltungen:
- EP-A2- 1 982 865

## Beschreibung

Die Erfindung betrifft einen Fahrzeugsitz mit mindestens einer seitlich angeordneten Bedieneinrichtung zum Bedienen von Fahrzeugsitz- und/oder Fahrzeugfunktionen und einer Verstelleinrichtung zur Verstellung einer vertikalen Position und/oder eines Neigungsgrades der mindestens einen Bedieneinrichtung gegenüber einem Rest des Fahrzeugsitzes, wobei die Verstelleinrichtung eine in Sitzbreitenrichtung verlaufende Drehachse und eine mit der Bedieneinrichtung verbundene Welle, welche beabstandet zur Drehachse und zusammen mit der Bedieneinrichtung um die Drehachse verschwenkbar angeordnet ist, umfasst.

Gattungsgemäße Fahrzeugsitze mit derartigen Bedieneinrichtungen sind aus dem Stand der Technik bereits gut bekannt. Diese Bedieneinrichtungen umfassen beispielsweise eine Art Steuerknüppel ("Joystick") und weitere Bedienelemente wie Tasten oder Schalter und bieten dem Fahrer oder Benutzer somit beispielsweise die Möglichkeit, Elemente wie den Fahrzeugsitz und/oder an einem dem Fahrzeugsitz zugeordneten Fahrzeug angeordnete Elemente wie eine Baggerschaufel zu verstellen, zu bewegen und/oder zu aktivieren.

Oft sind diese Bedieneinrichtungen mechanisch zumindest teilweise von Verstelleinrichtungen des Sitzes für Höhen- und/oder Längsposition des Sitzes entkoppelt und beispielsweise seitlich am Sitz angeordnet. Nimmt nun ein Bediener auf dem Sitz Platz und muss die Höhe des Sitzes verstellen, so sind die Bedieneinrichtungen unter Umständen für ihn nicht mehr so gut erreichbar. Weiterhin sind bekannte Verstelleinrichtungen für die Bedieneinrichtungen unter Umständen platzraubend konstruiert.

Es zeigt beispielsweise die EP 1 982 865 A2 einen Fahrersitz mit einem Dämpfersystem und einer Neigungseinrichtung, mittels welcher eine Höhe von Steuerhebeln einstellbar ist. Die gezeigte Mechanik weist jedoch kein Mittel auf, den Verstellweg der Höhe zu begrenzen.

Es ist daher Aufgabe der vorliegenden Erfindung, für einen gattungsgemäßen Fahrzeugsitz eine Verstelleinrichtung zu entwickeln, welche eine Verstellung der Bedieneinrichtung hinsichtlich deren vertikaler Position und/oder hinsichtlich deren Neigungsgrad ermöglicht und möglichst platzsparend aufgebaut ist. Außerdem soll es möglich sein, den Verstellweg der Bedieneinrichtung mechanisch sicher zu begrenzen.

Die Aufgabe der Erfindung wird gelöst von einem Fahrzeugsitz mit mindestens einer seitlich angeordneten Bedieneinrichtung zum Bedienen von Fahrzeugsitz- und/oder Fahrzeugfunktionen und einer Verstelleinrichtung zur Verstellung einer vertikalen Position und/oder eines Neigungsgrades der mindestens einen Bedieneinrichtung gegenüber einem Rest des Fahrzeugsitzes, wobei die Verstelleinrichtung eine in Sitzbreitenrichtung verlaufende Drehachse und eine mit der Bedieneinrichtung verbundene Welle, welche beabstandet zur Drehachse und zusammen mit der Bedieneinrichtung um die Drehachse verschwenkbar angeordnet ist, umfasst, wobei die Verstellung der vertikalen Position und/oder des Neigungsgrades der Bedieneinrichtung mittels einer Drehbewegung eines in Wirkkontakt mit der Welle stehenden Spindelelements der Verstelleinrichtung durchführbar ist, wobei eine Mittelachse des Spindelelements senkrecht zu einer Mittelachse der Welle angeordnet ist. Erfindungsgemäß ist dabei die Welle hinsichtlich der Verschwenkung um die Drehachse innerhalb einer Führungskulisse eines Kulissenelements bewegbar, wobei eine Form der Führungskulisse entlang eines Abschnittes eines Bogens verlaufend ausgestaltet ist, wobei der Bogen bevorzugt konzentrisch um die Drehachse verlaufend ausgestaltet ist.

Durch die Anordnung der Mittelachse des Spindelelements senkrecht zur Mittelachse der Welle ist gewährleistet, dass das Spindelelement hinsichtlich seiner Längsrichtung nicht hinter der Welle angeordnet werden muss. Im Gegenteil können beide Elemente zumindest teilweise übereinander angeordnet werden, was den Platzbedarf insgesamt reduziert.

Beispielsweise ist vorgesehen, dass ein Abstand zwischen der Mittelachse der Drehachse und der Mittelachse der Welle einen Wert aus einem Bereich von 200 mm bis 300 mm, bevorzugt von 230 mm bis 240 mm, meist bevorzugt von 237,4 mm aufweist.

Die Drehachse bleibt während der Betätigung der Verstelleinrichtung starr. Die Welle dreht sich zusammen mit der Bedieneinrichtung um die Drehachse.

Des Weiteren kann auf einfache Weise manuell oder automatisch die Welle um die Drehachse verschwenkt werden, indem beispielsweise der Benutzer des Sitzes vor Fahrtbeginn und nach Verstellung der Höhe der Sitzfläche die Höhe der Bedieneinrichtung einstellt. Da die Welle mit der Bedieneinrichtung verbunden ist, kann die Bedieneinrichtung einfach mit verschwenkt werden. Durch die Verschwenkung kann bevorzugt sowohl die vertikale Position als auch der Neigungsgrad der Bedieneinrichtung gegenüber einem Rest des Fahrzeugsitzes verändert werden. Dabei ist unter dem Rest des Fahrzeugsitzes beispielsweise alles zu verstehen, was nicht mit verschwenkt wird oder beispielsweise der Sitzunterbau.

Dabei ist denkbar, dass das Spindelelement mit einem Griffelement verbunden ist. Dieses Griffelement kann beispielsweise mit einer Anzeigeeinrichtung versehen sein, welche dem Benutzer anzeigt, inwiefern die Drehrichtung des Griffelements mit der Änderung der Höhe und/oder des Neigungsgrads der Bedieneinrichtung zusammenhängt. So ist denkbar, dass das Griffelement als Handknauf ausgestaltet ist. Ferner ist denkbar, dass auf dem Griffelement ein Drehpfeil mit Doppelspitze veranschaulicht ist, welcher im Uhrzeigersinn und entgegen dem Uhrzeigersinn weist und mit den Zeichen "+" für "Höher stellen" oder "-" für "Tiefer stellen" versehen ist.

Beispielsweise ist dieses Griffelement in Längsrichtung des Fahrzeugsitzes neben dem Spindelelement, auf der rechten Seite des Fahrzeugsitzes und/oder unterhalb eines Sitzteils des Fahrzeugsitzes angeordnet. So ist für eine Verstellmöglichkeit des Spindelelements an einer ergonomisch günstigen Stelle gesorgt.

Es ist denkbar, dass auf beiden Seiten des Fahrzeugsitzes jeweils eine Verstelleinrichtung angeordnet ist. Gemäß einer bevorzugten Ausführungsform ist der Fahrzeugsitz jedoch mit einer einzelnen Verstelleinrichtung und an seinen beiden Seiten, also zur linken und zur rechten Seite des Benutzers, mit jeweils einer Bedieneinrichtung versehen. Es ist ferner vorteilhaft, wenn die Welle ausgehend von einer Mittelposition um die Drehachse um einen Winkel aus einem Bereich von +/-2° bis +/-10°, bevorzugt um +/-4° verschwenkbar ist.

Vorteilhaft ist dabei ein Abstand zwischen der Drehachse und der Welle fest einstellbar und die Drehachse in Sitzlängsrichtung hinter der Welle angeordnet. Vorteilhaft ist die Drehachse in Sitzhöhenrichtung oberhalb der Welle angeordnet. Ferner ist vorteilhaft die Welle in Sitzhöhenrichtung oberhalb des Spindelelements angeordnet. Alle Anordnungen gelten vorteilhaft unabhängig von der Position der Welle innerhalb ihrer Verstellmöglichkeiten, welche beispielsweise anhand der unten genauer beschriebenen Führungskulisse definiert sind.

Es ist ferner vorteilhaft, wenn als Teil der Wirkverbindung zwischen der Welle und dem Spindelelement an einem ersten Ende des Spindelelements ein Schlittenelement angeordnet ist, wobei ein Innengewinde des Schlittenelements mit einem Außengewinde des Spindelelements in Wirkkontakt steht, so dass die Drehbewegung des Spindelelements in eine Translationsbewegung des Schlittenelements übertragbar ist.

Es wird also vorteilhaft auf teure Spindelgetriebe wie beispielsweise ein Kugelumlaufspindelgetriebe verzichtet. Stattdessen reicht ein Gewindespindelgetriebe aus. Bevorzugt ist das Schlittenelement an einem ersten Ende, welches das Innengewinde aufweist, im Wesentlichen zylinderförmig ausgestaltet. Ferner ist das Schlittenelement bevorzugt an einem zweiten Ende, welches dem Innengewinde abgewandt ist, im Wesentlichen in Form einer Gabel mit zwei plattenförmigen Gabelstücken ausgestaltet.

Bevorzugt ist ein Lagerelement angeordnet, mittels welchem das Spindelelement drehbar gelagert ist, und welches zumindest indirekt mit einem Sitzunterbau des Fahrzeugsitzes verbunden ist. Beispielsweise ist das Lagerelement ein gekantetes Blechteil.

Mittels der beschriebenen Anordnung kann insbesondere der Grad der Reibung zwischen dem Innengewinde des Schlittenelements und dem Außengewinde des Spindelelements individuell eingestellt werden. So ist es nämlich bevorzugt, wenn mittels der Wechselwirkung zwischen dem Innengewinde des Schlittenelements und dem Außengewinde des Spindelelements eine Arretierung der Welle erreichbar ist, wobei die Verstelleinrichtung frei von einer zusätzlichen Arretiereinrichtung zum Arretieren einer Position der Welle in Bezug auf die Verschwenkung um die Drehachse ausgestaltet ist. Bevorzugt ist dies auch dann gewährleistet, wenn zwei Bedieneinrichtungen am Fahrzeugsitz angeordnet sind, welche mittels einer einzelnen Verstelleinrichtung verstellt werden.

Teure Arretiereinrichtungen entfallen also. Ein weiterer Vorteil ist, dass die Schritte bezüglich des Lösens und des Verriegelns der Arretiereinrichtung entfallen, da diese gleichzeitig den Schritten bezüglich der eigentlichen Verstellung entsprechen. Es ist gewährleistet, dass die zum Lösen der Arretierung erforderliche Kraft manuell aufgewendet werden kann. Ferner ist gewährleistet, dass die zum Gewährleisten der Arretierung erforderliche Kraft mittels der reibschlüssigen Verbindung zwischen dem Innengewinde und dem Außengewinde bereitgestellt werden kann.

Es ist außerdem bevorzugt, wenn als weiterer Teil der Wirkverbindung zwischen dem Spindelelement und der Welle an einem dem Spindelelement abgewandten ersten Ende des Schlittenelements ein erstes Hebelelement mittels eines ersten Endes drehbar gelagert ist, wobei ein zweites Ende des erstes Hebelelements mit der Welle verbunden ist.

Die Welle wird also mittels eines Koppelstücks in Form des ersten Hebelelements von der beschriebenen Kinematik angetrieben.

Bevorzugt ist das erste Ende des ersten Hebelelements und das erste Ende des Schlittenelements jeweils mit einer Bohrung versehen, mittels welcher jeweils die Aufnahme eines Drehlagerelements zur beschriebenen drehbaren Lagerung beider Elemente zueinander ermöglicht ist. Weiter bevorzugt ist die Wirkverbindung zwischen dem Spindelelement und der Welle lediglich mittels des Spindelelements, des Schlittenelements, des ersten Hebelelements, des Drehlagerelements und der Welle ausgebildet und insbesondere frei von weiteren Elementen. Dies gilt für die Komponenten einer Verstelleinrichtung auf einer einzelnen Seite des Sitzes.

Bevorzugt sind das Spindelelement, das Schlittenelement und/oder das erste Hebelelement hinsichtlich ihrer Längserstreckung parallel zueinander angeordnet. Besonders bevorzugt sind analog dazu das Schlittenelement und/oder das erste Hebelelement hinsichtlich ihrer Längserstreckung genau wie die Mittelachse des Spindelelements senkrecht zur Mittelachse der Welle angeordnet. Diese Anordnungen gewährleisten eine möglichst platzsparende Anordnung der Komponenten.

Um eine möglichst einfache Beschränkung der Bewegung der Welle zu gewährleisten und damit den möglichen Verstellbereich der Verstelleinrichtung bzw. der Bedieneinrichtung zu definieren, ist es wie oben beschrieben vorgesehen, dass die Welle hinsichtlich der Verschwenkung um die Drehachse innerhalb einer Führungskulisse eines Kulissenelements bewegbar ist, wobei eine Form der Führungskulisse entlang eines Abschnittes eines Bogens verlaufend ausgestaltet ist, wobei der Bogen bevorzugt konzentrisch um die Drehachse verlaufend ausgestaltet ist. Dieser Bogen lässt sich im Sinne der Erfindung auch als "Führungsbogen" bezeichnen und ist als virtueller Bogen zu verstehen. Die Welle ist also mittels der beschriebenen Kinematik fliegend gelagert und bevorzugt in der Kulisse geführt.

Dabei ist es sinnvoll, wenn das Kulissenelement am Sitz, beispielsweise an einer Lagerstelle des Sitzunterbaus, angeordnet und insbesondere nicht mit der Welle bewegbar ist. Bevorzugt ist die Lagerstelle zwischen dem Kulissenelement und dem Sitzunterbau mittels eines Loslagers ausgestaltet, welches zunächst (bei noch nicht montierter Bedieneinrichtung) Horizontalbewegungen des Kulissenelements entlang der Sitzbreiten- und/oder Sitzlängsrichtung erlaubt und Vertikalbewegungen entlang der Sitzhöhenrichtung sperrt. Dies kann beispielsweise realisiert werden, indem eine horizontal angeordnete Lasche des Kulissenelements innerhalb einer Nut oder eines Schlitzes einer vertikal angeordneten Lasche eines Elements des Sitzunterbaus, beispielsweise einer Längsstrebe, angeordnet ist.

Weiter bevorzugt ist bei vollständig montierter Bedieneinrichtung mittels der in der Führungskulisse des Kulissenelements geführten Welle, welche bevorzugt einen festen Abstand zur Drehachse aufweist, und dem Sitzunterbau eine Festlagerung des Kulissenelements ausgestaltet.

Bevorzugt ist das Lagerelement für das Spindelelement unmittelbar und vollständig unterhalb des Kulissenelements angeordnet und mit diesem verbunden.

Weiter ist es sinnvoll, wenn die Bedieneinrichtung und die Welle mittels eines Zwischenelements verbunden sind, wobei dieses Zwischenelement beispielsweise als Gehäuseteil ausgebildet ist. Innerhalb oder an diesem Zwischenelement sind beispielsweise weitere Elemente wie die Elektronikkomponenten, die Stromversorgung oder die Steuerung der Bedieneinrichtung angeordnet. Ebenfalls ist es sinnvoll, wenn die Lagerung der Welle mittels eines Lagerelements dieses Zwischenelements realisierbar ist.

Innerhalb der oben beschriebenen Führungskulisse kann somit die Welle um einen bestimmten Winkel, bevorzugt um +4° bis -4° ausgehend von einer Grundstellung von 0°, mechanisch sicher geführt verschwenkt werden. Dabei ist die Anzahl der Verstellpositionen zumindest theoretisch unbegrenzt, da sich die Welle mittels ihrer Verschwenkung um die Drehachse innerhalb der Führungskulisse von einem obersten Abschnitt bis zu einem untersten Abschnitt stufenlos bewegen lässt. Es ist also mittels der beschriebenen Verstelleinrichtung eine stufenlose Verstellung der vertikalen Position und/oder des Neigungsgrades der Bedieneinrichtung gegenüber einem Rest des Fahrzeugsitzes möglich.

Die beschriebene Mechanik bedingt also eine Übersetzung der Drehbewegung des Spindelelements um dessen eigene Mittelachse in eine Verschwenkbewegung der Welle um die Drehachse. Der Grad dieser Übersetzung kann dabei beispielsweise geändert werden, indem der Übersetzungsgrad zwischen Spindelelement und Schlittenelement und/oder die Länge des ersten Hebelelements variiert werden. Bevorzugt ist der Grad der Übersetzung jedoch so ausgelegt, dass zum Erreichen einer obersten Position der Welle ausgehend von deren Mittelposition das Spindelelement um etwa 7 Umdrehungen gedreht werden muss. Insgesamt weist die erfindungsgemäße Verstelleinrichtung bevorzugt einen Gesamthub von 14 bis 16 Umdrehungen des Spindelelements, meist bevorzugt von 15 Umdrehungen auf.

Es ist weiterhin vorteilhaft, wenn die Drehachse beispielsweise mittels der Mittelachse einer zweiten Welle oder einer Buchse ausgestaltet ist und/oder die Drehachse gegenüber dem Rest des Fahrzeugsitzes frei von translatorischen und/oder rotatorischen Freiheitsgraden ausgestaltet ist. Beispielsweise ist die Drehachse in einem Verbindungsstück oder Halteteil gelagert, welches wiederum mit dem Sitzunterbau fest oder starr verbunden ist.

Besonders vorteilhaft ist bei einem Fahrzeugsitz mit zwei Bedieneinrichtungen, wovon eine links und die andere rechts der Sitzfläche angeordnet ist, nur ein Teil der Komponenten der erfindungsgemäßen Verstelleinrichtung auf beiden Seiten des Fahrzeugsitzes angeordnet. Ferner ist es vorteilhaft, wenn mittels eines einzigen Spindelelements eine Verstellung der vertikalen Position und/oder der Höhe von beiden Bedieneinrichtungen durchführbar ist. Dies kann beispielsweise mittels einer Wirkverbindung zwischen den beiden Seiten des Fahrzeugsitzes ermöglicht werden.

Insbesondere ist es bevorzugt, dass in Sitzbreitenrichtung ein Wellenelement angeordnet ist, dessen erstes Ende mittels eines mit dem Wellenelement starr verbundenen zweiten Hebelelements mit dem ersten Ende des ersten Hebelelements drehbar verbunden ist, wobei ein zweites Ende des Wellenelements mit einem weiteren zweiten Hebelelement starr verbunden ist.

Beispielsweise ist das Wellenelement drehbar an einem Sitzunterbau gelagert. Da das erste Hebelelement mit dem einen Ende des Schlittenelements verbunden ist, ist das zweite Hebelelement ebenfalls mit dem einen Ende des Schlittenelements verbunden.

Insbesondere ist es bevorzugt, wenn das weitere zweite Hebelelement ebenfalls drehbar mit einem ersten Ende eines weiteren ersten Hebelelements angeordnet ist. Dieses wiederum kann beispielsweise mittels eines zweiten Endes mit einer weiteren Welle verbunden sein. Diese weitere Welle kann schließlich ebenfalls mit der weiteren Bedieneinrichtung verbunden sein.

Die beschriebene Mechanik bedingt also, dass die Drehbewegung des Spindelelements zunächst in eine Translationsbewegung des Schlittenelements übertragbar ist. Durch die Verbindung zwischen dem zweiten Hebelelement, dem ersten Hebelelement, dem Wellenelement sowie dem weiteren ersten und zweiten Hebelelement ist also die Translationsbewegung des Schlittenelements sowohl in eine Drehbewegung der Welle auf der ersten Seite des Fahrzeugsitzes als auch in eine Drehbewegung der weiteren Welle auf der zweiten Seite des Fahrzeugsitzes übertragbar.

In diesem Fall gilt für die Wirkverbindung zwischen dem Spindelelement auf der ersten Seite des Fahrzeugsitzes und der weiteren Welle auf der zweiten Seite des Fahrzeugsitzes, dass diese bevorzugt lediglich mittels des Spindelelements, des Schlittenelements, des ersten und des weiteren ersten Hebelelements, des Drehlagerelements in zweifacher Ausfertigung, des zweiten Hebelelements und des weiteren zweiten Hebelelements, des Wellenelements, der Welle und der weiteren Welle ausgebildet und insbesondere frei von weiteren Elementen ist.

Um die Anzahl der verwendeten Teile zu reduzieren, hat es sich bewährt, wenn die Komponenten der Verstelleinrichtung, welche auf der ersten Seite des Fahrzeugsitzes angeordnet sind, identisch sind zu den ihnen entsprechenden Komponenten der Verstelleinrichtung, welche auf der zweiten Seite des Fahrzeugsitzes angeordnet sind.

So können insbesondere die Wellen sowie die ersten und zweiten Hebelelemente untereinander jeweils identisch ausgestaltet sein. Um auf der ersten und der zweiten Seite des Fahrzeugsitzes gleiche Bauteile einsetzen zu können, ist es beispielsweise denkbar, dass zu diesem Zwecke die Wellen, die ersten und/oder die zweiten Hebelelemente mindestens eine Spiegelsymmetrieebene aufweisen; bevorzugt ist diese Spiegelsymmetrieebene jeweils parallel zur Längserstreckung der Wellen, der ersten und/oder der zweiten Hebelelemente.

Die Welle ist natürlich zylindrisch ausgestaltet und weist beliebig viele Spiegelsymmetrieebenen auf. Umfasst sie zusätzlich ein Sicherungselement zur Verdrehsicherung in Relation zur Bedieneinrichtung, beispielsweise in Form einer Passfedernut, so weist sie genau eine Spiegelsymmetrieebene auf. Beispielsweise sind ferner die ersten und zweiten Hebelelemente in Form von flächigen, nicht gekanteten Blechteilen ausgestaltet, welche demnach ebenfalls eine Symmetrieebene aufweisen.

Insgesamt ist gewährleistet, dass der erforderliche Bauraum für die Mechanik/Kinematik der Verstelleinrichtung zwischen dem Fahrzeugsitz und der Bedieneinrichtung minimiert ist. Durch die Wahl der Mechanik, welche wie beschrieben vorteilhaft als Kniehebelkinematik ausgestaltet ist, und deren Anlenkpunkte ist für einen annähernd gleichmäßigen Verlauf bzw. für einen nur geringen Anstieg der Spindelkraft über den Verstellbereich bei Betätigung der Verstelleinrichtung gesorgt. Die gezeigte Mechanik/Kinematik erlaubt ferner eine stufenlose Verstellung. Außerdem ist für eine Selbstarretierung der Kinematik gesorgt.

Weitere Vorteile, Ziele und Eigenschaften vorliegender Erfindung werden anhand anliegender Zeichnung und nachfolgender Beschreibung erläutert, in welchen beispielhaft ein Fahrzeugsitz mit einer erfindungsgemäßen Verstelleinrichtung dargestellt und beschrieben ist. In der Zeichnung zeigen:
- Fig. 1: eine Seitenansicht eines erfindungsgemäßen Fahrzeugsitzes mit einer Bedieneinrichtung und einer Verstelleinrichtung;
- Fig. 2a, b: perspektivische Ansichten eines Sitzunterbaus des Fahrzeugsitzes aus Fig. 1;
- Fig. 3a-c: Seitenansichten der Verstelleinrichtung des Fahrzeugsitzes aus Fig. 1 von links und von rechts;
- Fig. 4a, b: Frontansichten der Verstelleinrichtung auf der linken und auf der rechten Seite des Fahrzeugsitzes aus Fig. 1;
- Fig. 5a: eine Schnittansicht entlang des Schnittes A-A gemäß der Fig. 3a; und
- Fig. 5b: eine Detailansicht des Ausschnittes B gemäß der Fig. 5a.

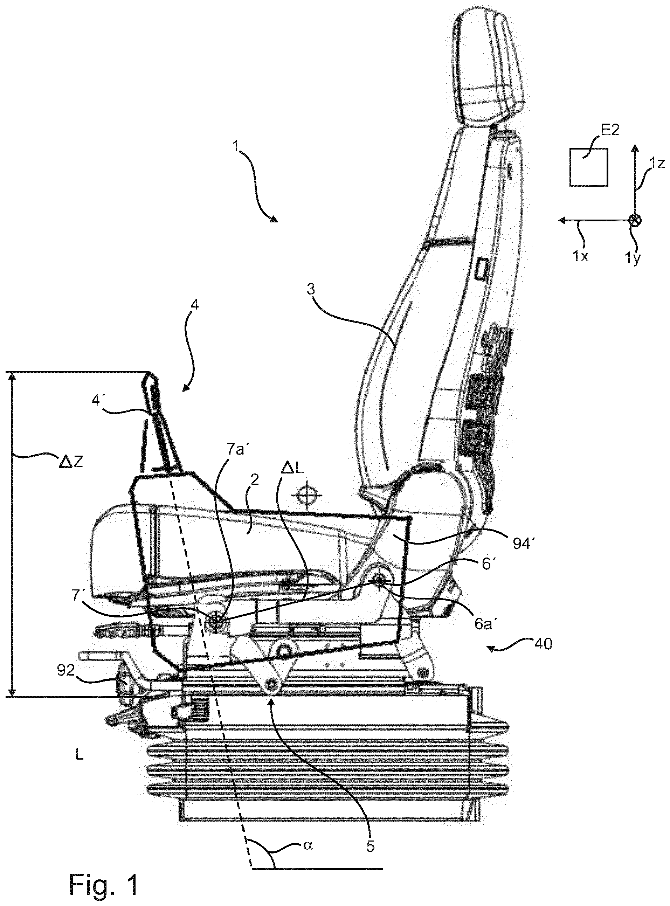

Eine mögliche Ausführungsform des erfindungsgemäßen Fahrzeugsitzes ist gemäß der Figur 1 abgebildet. Mittels des abgebildeten Koordinatensystems sind die Sitzlängsrichtung 1x, die Sitzbreitenrichtung 1y und die Sitzhöhenrichtung 1z veranschaulicht.

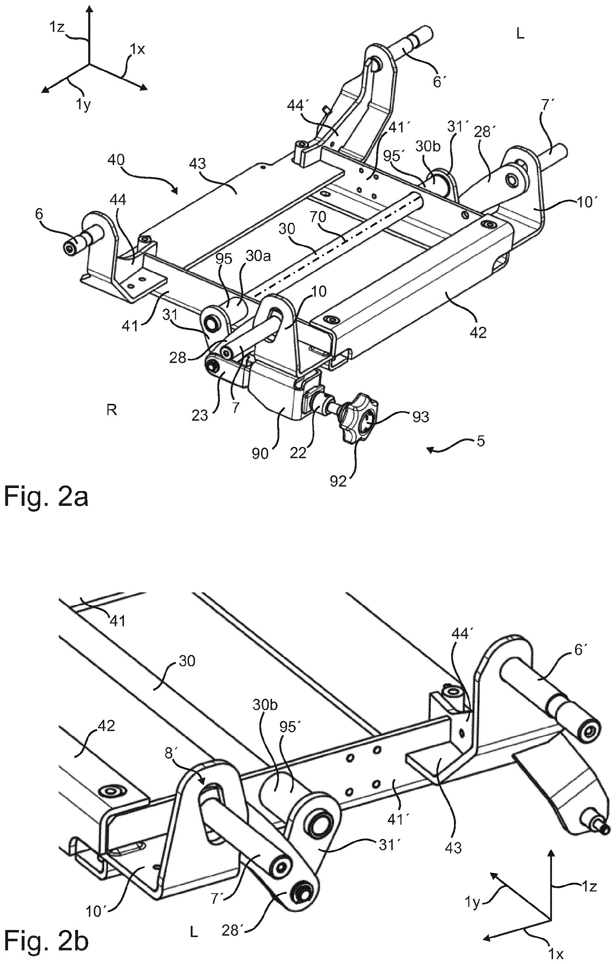

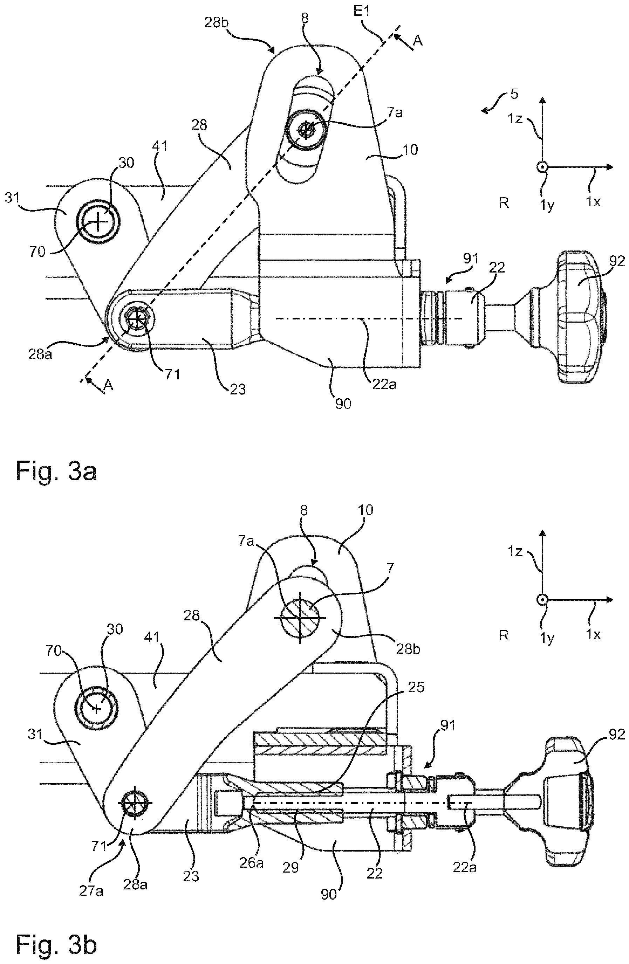

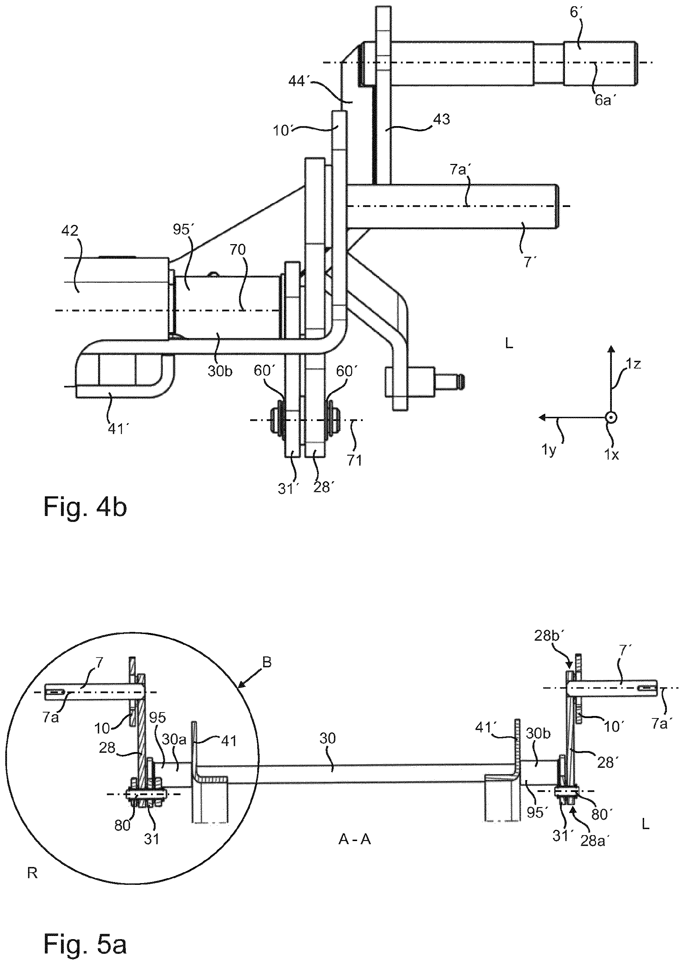

Vorab sei erwähnt, dass die Figuren 2a und 5a beide Seiten L, R des Fahrzeugsitzes 1 zeigen. Die Figuren 1, 2b, 3c und 4b zeigen die aus Sicht des Sitzinsassen linke Seite L des Fahrzeugsitzes 1. Die Figuren 3a, 3b, 4a und 5b zeigen die aus Sicht des Sitzinsassen rechte Seite R des Fahrzeugsitzes 1. Gemäß der Figur 3a ist ferner eine Ebene E1 veranschaulicht, welche die Schnittebene für die Ansicht gemäß der Fig. 5a repräsentiert und durch die Achse 7a und die Drehachse 71 verlaufend angeordnet ist.

Der Fahrzeugsitz 1 weist beispielsweise ein Sitzteil 2 und ein Rückenlehnenteil 3 auf. An beiden Seiten L, R des Fahrzeugsitzes 1 ist jeweils eine Bedieneinrichtung 4, 4' zum Bedienen von Fahrzeugsitz- und/oder Fahrzeugfunktionen, vorliegend in Form eines Joysticks, angeordnet, wobei gemäß Fig. 1 die Bedieneinrichtung 4 auf der rechten Seite R von der Bedieneinrichtung 4' auf der linken Seite L überdeckt wird. Ebenfalls ist eine Verstelleinrichtung 5 zur Verstellung einer vertikalen Position und/oder eines Neigungsgrades der Bedieneinrichtungen 4, 4' angeordnet.

Gezeigt ist also gemäß der Fig. 1 ein Fahrzeugsitz 1 mit einer seitlich, in diesem Fall auf der linken Seite L angeordneten Bedieneinrichtung 4' zum Bedienen von Fahrzeugsitz- und/oder Fahrzeugfunktionen und einer Verstelleinrichtung 5 zur Verstellung einer vertikalen Position Δz und/oder eines Neigungsgrades α der Bedieneinrichtungen 4, 4' gegenüber einem Rest des Fahrzeugsitzes 1.

Dabei umfasst die Verstelleinrichtung 5 auf der rechten Seite R eine in Sitzbreitenrichtung 1y verlaufende Drehachse 6 und eine mit der Bedieneinrichtung 4 verbundene Welle 7, welche beabstandet zur Drehachse 6 und zusammen mit der Bedieneinrichtung 4 um die Drehachse 6 verschwenkbar angeordnet ist.

Auf der linken Seite L ist spiegelsymmetrisch zu einer Ebene E2, welche in Sitzhöhenrichtung 1z und Sitzlängsrichtung 1x verlaufend angeordnet ist (siehe Fig. 1), eine weitere in Sitzbreitenrichtung 1y verlaufende Drehachse 6' der Verstelleinrichtung 5 und eine weitere mit der Bedieneinrichtung 4' verbundene Welle 7' angeordnet, wobei die weitere Welle 7' beabstandet zur Drehachse 6' und zusammen mit der Bedieneinrichtung 4' um die Drehachse 6' verschwenkbar angeordnet ist.

Alle weiteren Beschreibungen, welche sich auf spiegelbildlich angeordnete Elemente beziehen, gelten also analog für beide Seiten L, R des Fahrzeugsitzes 1, auch wenn sie der Übersichtlichkeit wegen nur für eine Seite L oder R beschrieben sind. Dies gilt insbesondere für folgende Elemente, welche auf beide Seiten L und R des Fahrzeugsitzes angeordnet sind: Bedieneinrichtungen 4, 4', Drehachsen 6, 6' mit Mittelachsen 6a, 6a', Wellen 7, 7'mit Mittelachsen 7a, 7a', Kulissenelemente 10, 10' mit Führungskulissen 8, 8', erste Hebelelemente 28, 28' und zweite Hebelelemente 31, 31'. Die Elemente auf der linken Seite L werden dabei mit einem Strich (Beispiel: Drehachse 6') und die Elemente auf der rechten Seite R ohne Strich (Beispiel: Drehachse 6) bezeichnet.

Ebenfalls zu sehen gemäß der Fig. 1 ist das Griffelement 92 eines Spindelelements 22 (siehe vor allem Fig. 2a und 3b). Die Verstellung der vertikalen Position Δz und/oder des Neigungsgrades α der Bedieneinrichtungen 4, 4' ist vorliegend mittels einer Drehbewegung des in Wirkkontakt mit der Welle 7 stehenden Spindelelements 22 der Verstelleinrichtung 5 durchführbar, wobei eine Mittelachse 22a des Spindelelements 22 senkrecht zu einer Mittelachse 7a der Welle 7 angeordnet ist. Vorliegend ist das Spindelelement 22 vollständig unterhalb der Welle 7 angeordnet. Die Drehbewegung des Spindelelements 22 ist mittels einer Drehung des Griffelements durchführbar.

Wie nachstehend noch erläutert wird, steht das Spindelelement 22 auch in Wirkkontakt mit der weiteren Welle 7'; ferner ist die Mittelachse 22a des Spindelelements 22 senkrecht zu einer Mittelachse 7a' der Welle 7' angeordnet. Vorliegend ist das Spindelelement 22 vollständig unterhalb der Welle 7' angeordnet.

Vorliegend weist ein Abstand ΔL zwischen der Mittelachse 6a der Drehachse 6 und der Mittelachse 7a der Welle 7 einen Wert von 237,4 mm auf.

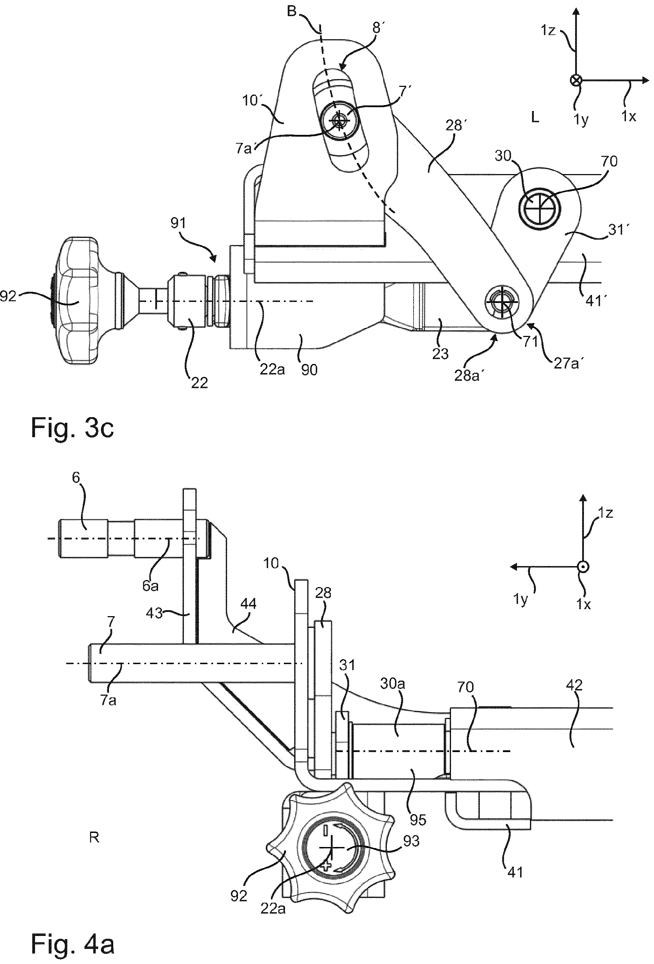

Die Fig. 4a zeigt, dass das Spindelelement 22 mit dem als Handknauf ausgestalteten Griffelement 92 verbunden ist und dass das Griffelement 92 mit einer Anzeigeeinrichtung 93 versehen ist, welche als Drehpfeil mit Doppelspitze ausgestaltet ist und mit den Zeichen "+" für "Höher stellen" oder "-" für "Tiefer stellen" versehen ist.

Vorliegend ist dieses Griffelement 92 in Längsrichtung 1x des Fahrzeugsitzes 1 neben dem Spindelelement 22, auf der rechten Seite R des Fahrzeugsitzes 1 und unterhalb des Sitzteils 3 des Fahrzeugsitzes 1 angeordnet.

Vorliegend ist der Fahrzeugsitz 1 mit einer einzelnen Verstelleinrichtung 5 und an seinen beiden Seiten, also zur linken L und zur rechten Seite R des Benutzers, mit jeweils einer Bedieneinrichtung 4, 4' versehen.

Vorliegend ist dabei der Abstand ΔL zwischen der Drehachse 6 und der Welle 7 fest eingestellt und die Drehachse 6 in Sitzlängsrichtung 1x hinter der Welle 7 und in Sitzhöhenrichtung 1z oberhalb der Welle 7 angeordnet. Ferner ist die Welle 7 in Sitzhöhenrichtung 1z oberhalb des Spindelelements 22 angeordnet.

Als Teil der Wirkverbindung zwischen der Welle 7 und dem Spindelelement 22 ist an einem ersten Ende 26a des Spindelelements 22 ein Schlittenelement 23 angeordnet, wobei ein Innengewinde 25 des Schlittenelements 23 mit einem Außengewinde 29 des Spindelelements 22 in Wirkkontakt steht (siehe Fig. 3b), so dass die Drehbewegung des Spindelelements 22 in eine Translationsbewegung des Schlittenelements 23 übertragbar ist.

Vorliegend ist ein gekantetes Blechteil als ein Lagerelement 90 angeordnet, mittels welchem das Spindelelement 22 in Relation zu einem Sitzunterbau 40 des Fahrzeugsitzes 1 drehbar gelagert ist, und welches indirekt mit dem Sitzunterbau 40 verbunden ist. Gemäß den Figuren 3a bis 3c ist eine Lagereinheit 91 zu sehen, mittels welcher das Spindelelement 22 mit dem Lagerelement 90 verbunden ist. Diese Lagereinheit 91 umfasst beispielsweise Kugellager, Buchsen und/oder Scheiben und wird vorliegend nicht näher beschrieben.

Als weiterer Teil der Wirkverbindung zwischen dem Spindelelement 22 und der Welle 7 ist ferner an einem dem Spindelelement 22 abgewandten ersten Ende 27a des Schlittenelements 23 ein erstes Hebelelement 28 mittels eines ersten Endes 28a um eine Drehachse 71 drehbar gelagert, wobei ein zweites Ende 28b des ersten Hebelelements 28 mit der Welle 7 verbunden ist.

Vorliegend ist das erste Ende 28a des ersten Hebelelements 28 und das erste Ende des Schlittenelements 23 jeweils mit einer Bohrung versehen, mittels welcher jeweils die Aufnahme eines Drehlagerelements zur beschriebenen drehbaren Lagerung beider Elemente 28, 22 um die Drehachse 71 zueinander ermöglicht ist.

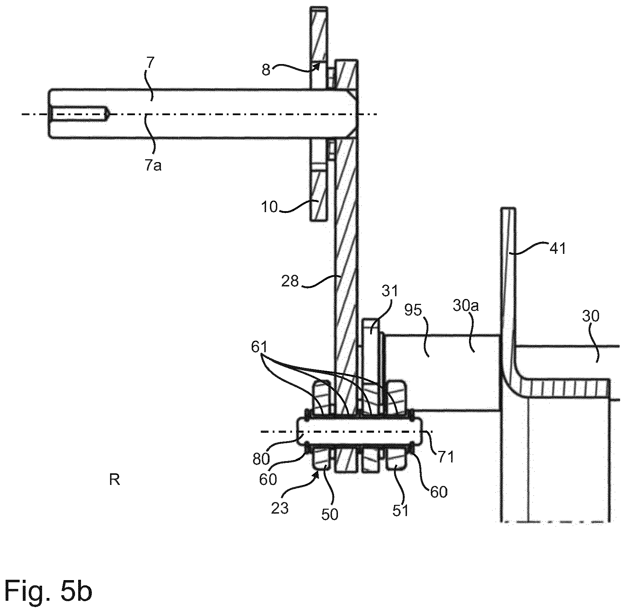

Das Drehlagerelement umfasst gemäß Fig. 5b ein Wellenelement 80 sowie zwei Gabelelemente 50, 51, welche vorliegend als plattenförmige Elemente ausgestaltet und auf dem Wellenelement 80 zu einer Seite des ersten 28 oder des zweiten Hebelelements 31 angeordnet sind. Vorliegend bildet das erste Ende 27a des Schlittenelements 23 die Gabelelemente 50, 51 aus.

Ferner umfasst das Drehlagerelement Sicherungselemente 60, welche vorliegend als Außensicherungsringe ausgestaltet und zu einer Seite der Gabelelemente 50, 51 angeordnet sind. Zwischen einem Wellenelement 80 und den Gabelelementen 50, 51 sowie den Hebelelementen 28, 31 sind Buchsenelemente 61 in Form von Sinterbundbuchsen angeordnet.

Da das Schlittenelement 23 nur auf der rechten Seite R des Fahrzeugsitzes 1 angeordnet ist, umfasst die linke Seite L ein im Vergleich zum Wellenelement 80 kürzeres Wellenelement 80', Sicherungselemente 60', jedoch keine Gabelelemente.

Vorliegend sind das Spindelelement 22, das Schlittenelement 23 und das erste Hebelelement 28 hinsichtlich ihrer Längserstreckung parallel zueinander angeordnet. Analog dazu sind das Schlittenelement 23 und das erste Hebelelement 28 hinsichtlich ihrer Längserstreckung genau wie die Mittelachse 22a des Spindelelements 22 senkrecht zur Mittelachse 7a der Welle 7 angeordnet.

Vorliegend ist die Welle 7 hinsichtlich der Verschwenkung um die Drehachse 6 innerhalb einer Führungskulisse 8 eines Kulissenelements 10 bewegbar (siehe Fig. 3a und 3c), wobei eine Form der Führungskulisse 8 entlang eines Abschnittes eines Bogens B verlaufend ausgestaltet ist, wobei der Bogen B vorliegend konzentrisch um die Drehachse 6 verlaufend ausgestaltet ist. Dabei ist das Kulissenelement 10 an einer Lagerstelle des Sitzunterbaus 40 angeordnet und nicht mit der Welle 7 bewegbar.

Der Sitzunterbau 40 umfasst vorliegend zwei sich in Sitzlängsrichtung 1x erstreckende Längsstreben 41, 41' sowie eine vordere 42 und eine hintere Querstrebe 43, welche sich jeweils in Sitzbreitenrichtung 1y erstrecken. Es bildet die hintere Querstrebe 43 die Lagerstelle für die Drehachse 6, 6' auf beiden Seiten des Sitzunterbaus 40 auf. Die hintere Querstrebe 43 ist also von der linken Seite L bis zur rechten Seite R des Fahrzeugsitzes 1 durchgehend ausgebildet. Vorliegend ist sie noch auf beiden Seiten mittels je einer Versteifungsstrebe 44, 44' in Form eines Knotenblechs verstärkt, welche vorliegend mit der hinteren Querstrebe 43 verschweißt ist.

Vorliegend ist die Drehachse 6 durch eine Bohrung in der hinteren Querstrebe 43 geführt und mit dem Knotenblech 44 mittels einer Schweißverbindung starr verbunden.

Gemäß Fig. 2a und 3b ist zu sehen, dass das Lagerelement 90 für das Spindelelement 22 unmittelbar und vollständig unterhalb des Kulissenelements 10 angeordnet und mit diesem verbunden ist.

Weiter ist gemäß Fig. 1 gezeigt, dass die Bedieneinrichtung 4 und die Welle 7 mittels eines Zwischenelements 94 verbunden sind, wobei dieses Zwischenelement 94 vorliegend als Gehäuseteil ausgebildet ist. Innerhalb oder an diesem Zwischenelement 94 sind nicht gezeigte weitere Elemente wie die Elektronikkomponenten, die Stromversorgung oder die Steuerung der Bedieneinrichtung angeordnet.

Innerhalb der oben beschriebenen Führungskulisse 8 kann somit die Welle 7 um einen bestimmten Winkel, bevorzugt um +4° bis -4° ausgehend von einer Grundstellung von 0°, mechanisch sicher geführt verschwenkt werden. Es ist verständlich, dass mit der Welle 7 sich die gesamte Bedieneinrichtung 4 mit verschwenkt, und zwar um die Drehachse 6.

Der gezeigte Fahrzeugsitz 1 weist wie erwähnt zwei Bedieneinrichtungen 4, 4' auf, wovon eine 4' links L und die andere 4 rechts R der Sitzfläche angeordnet ist. Die Verstelleinrichtung 5 ist auf beiden Seiten L, R des Fahrzeugsitzes 1 angeordnet, wobei jedoch nur ein Teil der Komponenten oder Elemente der Verstelleinrichtung 5 in zweifacher Ausführung und auf beiden Seiten L, R angeordnet sind.

Demnach sind das Spindelelement 22, das Schlittenelement 23, das Griffelement 92 mit Anzeigeeinrichtung 93, das Lagerelement 90 sowie nicht näher bezeichnete Mittel zur Verbindung dieser Elemente 22, 23, 92, 93, 90 oder zur Anbindung dieser Elemente 22, 23, 92, 93, 90 an den Rest des Fahrzeugsitzes 1 nur auf einer Seite, vorliegend nur auf der rechten Seite R des Fahrzeugsitzes 1 angeordnet.

Auf beiden Seiten L, R des Fahrzeugsitzes 1 angeordnet und somit in zweifacher Ausführung vorhanden sind vorliegend die Drehachse 6, 6', die Welle 7, 7', das Kulissenelement 10, 10', das erste Hebelelement 28, 28' und das zweite Hebelelement 31, 31' sowie nicht näher bezeichnete Mittel zur Verbindung dieser Elemente oder zur Anbindung dieser Elemente 6, 6', 7, 7', 10, 10', 28, 28', 31, 31' an den Rest des Fahrzeugsitzes 1.

Dabei sind die Elemente 6, 7, 10, 28, 31 der Verstelleinrichtung 5, welche auf der ersten oder rechten Seite R des Fahrzeugsitzes 1 angeordnet sind, identisch ausgestaltet zu den ihnen entsprechenden Elementen 6', 7', 10', 28', 31', welche auf der zweiten oder linken Seite L des Fahrzeugsitzes 1 angeordnet sind.

In Sitzbreitenrichtung 1y ist ein Wellenelement 30 angeordnet ist, dessen erstes Ende 30a mittels des mit dem Wellenelement 30 starr verbundenen zweiten Hebelelements 31 mit dem ersten Ende 28a des ersten Hebelelements 28 drehbar verbunden ist, wobei ein zweites Ende 30b des Wellenelements 30 mit dem weiteren zweiten Hebelelement 31' starr verbunden ist.

Das weitere zweite Hebelelement 31' ist ebenfalls drehbar mit einem ersten Ende 28a' eines weiteren ersten Hebelelements 28' verbunden (siehe insbesondere Fig. 5a). Dieses erste Ende 28a' des Weiteren ersten Hebelelements 28' ist wiederum mittels eines zweiten Endes 28b' mit einer weiteren Welle 7' verbunden. Diese weitere Welle 7' ist wiederum mit der weiteren Bedieneinrichtung 4' verbunden.

Vorliegend ist das Wellenelement 30 drehbar am Sitzunterbau 40 gelagert. Dafür weisen beide Längsstreben 41, 41' jeweils eine Bohrung auf, durch die das Wellenelement 30 hindurchgeführt angeordnet ist. Buchsenelemente 95, 95' sind zwischen den Längsstreben 41, 41' und den zweiten Hebelelementen 31, 31' an beiden Enden 30a, 30b des Wellenelements 30 angeordnet und sorgen für eine axiale Sicherung des Wellenelements 30, also in Sitzbreitenrichtung 1y.

Das erste Hebelelement 28 ist mit dem einen Ende 27a des Schlittenelements 23 verbunden und mittels der Drehachse 71 drehbar zu diesem gelagert. Ebenfalls ist das zweite Hebelelement 31 mit dem einen Ende 27a des Schlittenelements 23 verbunden und mittels der Drehachse 71 drehbar zu diesem gelagert.

Da über die zentral angeordnete Welle 30 und mittels der beschriebenen Mechanik die Drehbewegung des Spindelelements 22 in eine Drehbewegung der Welle 7' auf der linken Seite L und gleichzeitig in eine Drehbewegung der Welle 7 auf der rechten Seite R des Fahrzeugsitzes 1 übertragbar ist, ist also mittels eines einzigen Spindelelements 23 eine Verstellung der vertikalen Position Δz und/oder des Neigungsgrades α von beiden Bedieneinrichtungen 4, 4' durchführbar. Es versteht sich, dass es sich bei dem vorstehend erläuterten Ausführungsbeispiel lediglich um eine erste Ausgestaltung des erfindungsgemäßen Fahrzeugsitzes handelt. Insofern beschränkt sich die Ausgestaltung der Erfindung nicht auf dieses Ausführungsbeispiel.

### Bezugszeichenliste

- 1: Fahrzeugsitz
- 1x: Sitzlängsrichtung
- 1y: Sitzbreitenrichtung
- 1z: Sitzhöhenrichtung
- 4, 4': Bedieneinrichtung
- 5: Verstelleinrichtung
- 6, 6': Drehachse
- 6a, 7a, 22a: Mittelachse
- 7, 7': Welle
- 8, 8': Führungskulisse
- 10, 10': Kulissenelement
- 22: Spindelelement
- 23: Schlittenelement
- 25: Innengewinde
- 26a, 27a, 28a, 28a', 28b, 28b', 30a, 30b: Ende
- 28, 28', 31, 31': Hebelelement
- 29: Außengewinde
- 30, 80, 80': Wellenelement
- 40: Sitzunterbau
- 41, 41': Längsstrebe
- 42, 43: Querstrebe
- 44: Versteifungsstrebe
- 50, 51: Gabelelement
- 60: Sicherungselement
- 61, 95, 95': Buchsenelement
- 70, 71: Achse
- 90: Lagerelement
- 91: Lagereinheit
- 92: Griffelement
- 93: Anzeigeeinrichtung
- 94: Zwischenelement
- B: Bogen
- E1, E2: Ebene
- L, R: Seite
- α: Neigungsgrad
- ΔL: Abstand
- Δz: vertikale Position

## Patentansprüche

1. Fahrzeugsitz (1) mit mindestens einer seitlich angeordneten Bedieneinrichtung (4, 4') zum Bedienen von Fahrzeugsitz- und/ oder Fahrzeugfunktionen und einer Verstelleinrichtung (5) zur Verstellung einer vertikalen Position (Δz) und/ oder eines Neigungsgrades (α) der mindestens einen Bedieneinrichtung (4, 4') gegenüber einem Rest des Fahrzeugsitzes (1),
wobei die Verstelleinrichtung (5) eine in Sitzbreitenrichtung (1y) verlaufende Drehachse (6, 6') und eine mit der Bedieneinrichtung (4, 4') verbundene Welle (7, 7'), welche beabstandet zur Drehachse (6, 6') und zusammen mit der Bedieneinrichtung (4, 4') um die Drehachse (6, 6') verschwenkbar angeordnet ist, umfasst,
wobei die Verstellung der vertikalen Position (Δz) und/ oder des Neigungsgrades (α) der Bedieneinrichtung (4, 4') mittels einer Drehbewegung eines in Wirkkontakt mit der Welle (7, 7') stehenden Spindelelements (22) der Verstelleinrichtung (5) durchführbar ist, wobei eine Mittelachse (22a) des Spindelelements (22) senkrecht zu einer Mittelachse (7a, 7a') der Welle (7, 7') angeordnet ist,
**dadurch gekennzeichnet, dass**
die Welle (7, 7') hinsichtlich der Verschwenkung um die Drehachse (6, 6') innerhalb einer Führungskulisse (8, 8') eines Kulissenelements (10, 10') bewegbar ist, wobei eine Form der Führungskulisse (8, 8') entlang eines Abschnittes eines Bogens (B) verlaufend ausgestaltet ist, wobei der Bogen (B) bevorzugt konzentrisch um die Drehachse (6, 6') verlaufend ausgestaltet ist.

2. Fahrzeugsitz (1) nach Anspruch 1,
**dadurch gekennzeichnet, dass**
ein Abstand (ΔL) zwischen der Drehachse (6, 6') und der Welle (7, 7') fest einstellbar und die Drehachse (6, 6') in Sitzlängsrichtung (1x) hinter der Welle (7, 7') angeordnet ist.

3. Fahrzeugsitz (1) nach Anspruch 1 oder 2,
**dadurch gekennzeichnet, dass**
an einem ersten Ende (26a) des Spindelelements (22) ein Schlittenelement (23) angeordnet ist, wobei ein Innengewinde (25) des Schlittenelements (23) mit einem Außengewinde (29) des Spindelelements (22) in Wirkkontakt steht, so dass die Drehbewegung des Spindelelements (22) in eine Translationsbewegung des Schlittenelements (23) übertragbar ist.

4. Fahrzeugsitz (1) nach einem der vorhergehenden Ansprüche,
**dadurch gekennzeichnet, dass**
mittels der Wechselwirkung zwischen dem Innengewinde (25) des Schlittenelements (23) und dem Außengewinde (29) des Spindelelements (22) eine Arretierung der Welle (7, 7') erreichbar ist, wobei die Verstelleinrichtung (5) frei von einer zusätzlichen Arretiereinrichtung zum Arretieren einer Position der Welle (7, 7') in Bezug auf die Verschwenkung um die Drehachse (6, 6') ausgestaltet ist.

5. Fahrzeugsitz (1) nach einem der vorhergehenden Ansprüche,
**dadurch gekennzeichnet, dass**
an einem dem Spindelelement (22) abgewandten ersten Ende (27a) des Schlittenelements (23) ein erstes Hebelelement (28) mittels eines ersten Endes (28a) drehbar gelagert ist, wobei ein zweites Ende (28b) des erstes Hebelelements (28) mit der Welle (7) verbunden ist.

6. Fahrzeugsitz (1) nach einem der vorhergehenden Ansprüche,
**dadurch gekennzeichnet, dass**
in Sitzbreitenrichtung (1y) ein Wellenelement (30) angeordnet ist, dessen erstes Ende (30a) mittels eines mit dem Wellenelement (30) starr verbundenen zweiten Hebelelements (31) mit dem ersten Ende (28a) des ersten Hebelelements (28) drehbar verbunden ist, wobei ein zweites Ende (30b) des Wellenelements (30) mit einem weiteren zweiten Hebelelement (31') starr verbunden ist.

## Claims

1. Vehicle seat (1) with at least one laterally positioned operating device (4, 4') for operating vehicle seat functions and/or vehicle functions and an adjustment device (5) for adjusting a vertical position (Δz) and/or an inclination (α) of the at least one operating device (4, 4') with respect to a rest of the vehicle seat (1),
wherein the adjustment device (5) comprises a rotational axis (6, 6') extending in the seat width direction (1y) and a shaft (7, 7') which is connected to the operating device (4, 4'), positioned at a distance from the rotational axis (6, 6') and rotatable together with the operating device (4, 4') about the rotational axis (6, 6'),
wherein the adjustment of the vertical position (Δz) and/or of the inclination (α) of the operating device (4, 4') is feasible by means of a rotational movement of a spindle element (22) of the adjustment device (5), which is in operative contact with the shaft (7, 7'), wherein a central axis (22a) of the spindle element (22) is arranged perpendicular to a central axis (7a, 7a') of the shaft (7, 7'),
**characterized in that** the shaft (7, 7') is movable within a slotted guide (8, 8') of a slotted guide element (10, 10') with respect to the pivoting about the rotational axis (6, 6'), wherein a shape of the slotted guide (8, 8') is configured to extend along a portion of an arc (B), wherein the arc (B) is preferably configured to extend concentrically about the rotational axis (6, 6').

2. Vehicle seat (1) according to claim 1, **characterized in that** a distance (ΔL) between the rotational axis (6, 6') and the shaft (7, 7') can be permanently set and the rotational axis (6, 6') is positioned behind the shaft (7, 7') in the seat length direction (1x).

3. Vehicle seat (1) according to either claim 1 or claim 2, **characterized in that** a slide element (23) is arranged at a first end (26a) of the spindle element (22), wherein an internal thread (25) of the slide element (23) is in operative contact with an external thread (29) of the spindle element (22), so that the rotational movement of the spindle element (22) is transmissible into a translational movement of the slide element (23).

4. Vehicle seat (1) according to any of the preceding claims,
**characterized in that** a locking of the shaft (7, 7') is achievable by means of the interaction between the internal thread (25) of the slide element (23) and the external thread (29) of the spindle element (22), wherein the adjustment device (5) is provided free from an additional locking device for locking a position of the shaft (7, 7') with respect to the pivoting about the rotational axis (6, 6').

5. Vehicle seat (1) according to any of the preceding claims, **characterized in that** a first lever element (28) is rotatably mounted, by means of a first end (28a), on a first end (27a) of the slide element (23) that is remote from the spindle element (22), wherein a second end (28b) of the first lever element (28) is connected to the shaft (7).

6. Vehicle seat (1) according to any of the preceding claims, **characterized in that**, a shaft element (30) is arranged in the seat width direction (1y), the first end (30a) of which is rotatably connected to the first end (28a) of the first lever element (28) by means of a second lever element (31) which is rigidly connected to the shaft element (30), wherein a second end (30b) of the shaft element (30) is rigidly connected to another second lever element (31').

## Revendications

1. Siège de véhicule (1) comportant au moins un dispositif de commande (4, 4') disposé latéralement pour la commande de fonctions de siège de véhicule et / ou de véhicule et un dispositif de réglage (5) pour le réglage d'une position verticale (Δz) et / ou d'un degré d'inclinaison (α) dudit au moins un dispositif de commande (4, 4') par rapport au reste du siège de véhicule (1), le dispositif de réglage (5) comportant un axe de rotation (6, 6') s'étendant dans la direction de la largeur du siège (1y) et un arbre (7, 7') qui est relié au dispositif de commande (4, 4') et lequel est disposé espacé de l'axe de rotation (6, 6') et apte à pivoter conjointement avec le dispositif de commande (4, 4') autour de l'axe de rotation (6, 6'), le réglage de la position verticale (Δz) et/ou du degré d'inclinaison (α) du dispositif de commande (4, 4') étant réalisable au moyen d'un mouvement de rotation d'un élément broche (22) du dispositif de réglage (5) se trouvant en contact fonctionnel avec l'arbre (7, 7'), un axe central (22a) de l'élément broche (22) étant disposé perpendiculairement à un axe central (7a, 7a') de l'arbre (7, 7'), **caractérisé par le fait que** l'arbre (7, 7') est déplaçable par rapport au pivotement autour de l'axe de rotation (6, 6') à l'intérieur d'une coulisse de guidage (8, 8') d'un élément coulisse (10, 10'), une forme de la coulisse de guidage (8, 8') étant configurée s'étendant le long d'une section d'un arc (B), l'arc (B) étant configuré s'étendant de préférence concentriquement autour de l'axe de rotation (6, 6').

2. Siège de véhicule (1) selon la revendication 1, **caractérisé par le fait qu'**une distance (ΔL) entre l'axe de rotation (6, 6') et l'arbre (7, 7') est apte à être fixée de façon permanente et l'axe de rotation (6, 6') est disposé derrière l'arbre (7, 7') dans la direction longitudinale du siège (1x).

3. Siège de véhicule (1) selon l'une des revendications 1 ou 2, **caractérisé par le fait qu'**un élément coulisseau (23) est disposé sur une première extrémité (26a) de l'élément broche (22), un filetage interne (25) de l'élément coulisseau (23) étant en contact fonctionnel avec un filetage externe (29) de l'élément broche (22), de telle sorte que le mouvement de rotation de l'élément broche (22) est transférable en un mouvement de translation de l'élément coulisseau (23).

4. Siège de véhicule (1) selon l'une des revendications précédentes, **caractérisé par le fait qu'**un blocage de l'arbre (7, 7') est réalisable au moyen de l'interaction entre le filetage interne (25) de l'élément coulisseau (23) et le filetage externe (29) de l'élément broche (22), le dispositif de réglage (5) étant configuré sans un dispositif de blocage supplémentaire pour le blocage d'une position de l'arbre (7, 7') par rapport au pivotement autour de l'axe de rotation (6, 6').

5. Siège de véhicule (1) selon l'une des revendications précédentes, **caractérisé par le fait qu'**un premier élément levier (28) est monté rotatif par une première extrémité (28a) sur une première extrémité (27a) de l'élément coulisseau (23) tournée à l'opposé de l'élément broche (22), une seconde extrémité (28b) du premier élément levier (28) étant reliée à l'arbre (7).

6. Siège de véhicule (1) selon l'une des revendications précédentes, **caractérisé par le fait que** dans la direction de la largeur du siège (1y), est disposé un élément arbre (30) dont la première extrémité (30a) est reliée à rotation avec la première extrémité (28a) du premier élément levier (28) au moyen d'un second élément levier (31) relié de façon rigide avec l'élément arbre (30), une seconde extrémité (30b) de l'élément arbre (30) étant reliée de façon rigide avec un autre second élément levier (31').
